# EUROPEAN PATENT APPLICATION

(11) **EP 4 170 069 A1**
(43) Date of publication of application: **26.04.2023**
(21) Application number: 21203661.0
(22) Date of filing: 20.10.2021
(51) Int. Cl.: C25B 9/19, C25B 9/60, C25B 9/77

(54) **ELECTROLYSIS CELL AND ARRANGEMENT**

(71) Applicant: L'Air Liquide - Société Anonyme pour l'Etude et l'Exploitation des Procédés Georges Claude, 75321 Paris Cedex 07 (FR)
(72) Inventor: RICHET, Nicolas, 78350 Jouy-En-Josas (FR); DEBELLEMANIERE, Olivier, 78350 Jouy-En-Josas (FR); MAAZAOUI, Hakim, 78350 Jouy-En-Josas (FR); VERNA, Eric, 78350 Jouy-En-Josas (FR)
(74) Representative: Schwenderling, Jens

(57) **Abstract**

Electrolysis cell (1), comprising
- an anode (2),
- a cathode (3),
- a membrane (4) arranged between the anode (2) and the cathode (3),
- an isolator (5) that is attached to the anode (2), the membrane (4) and the cathode (3) such that an anode chamber (6) is formed between the anode (2), the membrane (4) and the isolator (5) and a cathode chamber (7) is formed between the cathode (3), the membrane (4) and the isolator (5),
wherein the isolator (5) comprises multiple isolation elements (8,9,10), and wherein each of the isolation elements (8,9,10) is joined permanently to at least one of the other isolation elements (8,9,10).

## Description

The invention is directed to an electrolysis cell, an electrolysis arrangement comprising multiple of such electrolysis cells and a method for maintaining such an electrolysis cell.

A key challenge in manufacturing electrolysis cells is the handling of gaskets. These are required in order to seal the anode and cathode spaces. Large electrolysis arrangements comprise hundreds of gaskets. Failure of a gasket leads to a leakage that can be dangerous and that can cause significant downtime.

An example of a known electrolysis cell comprises an anode, a cathode and a membrane arranged between the anode and the cathode. The membrane is connected to the anode and the cathode with electrically isolating material such that an anode space is formed between the anode, the membrane and the electrically isolating material and a cathode space is formed between the cathode, the membrane and the electrically isolating material. The anode space and the cathode space are sealed using gaskets between the membrane and the electrically isolating material on a first side of the membrane, between the electrically isolating material and the anode, between the membrane and the electrically isolating material on a second side of the membrane and between the electrically isolating material and the cathode. That is, four gaskets are required. This is disadvantageous in view of gasket design.

The object of the invention is to improve the known electrolysis cell such that assembly and maintenance are facilitated.

The object is solved with the electrolysis cell, the electrolysis arrangement and the method for maintaining the electrolysis cell according to the independent claims. Advantageous refinements are presented in the dependent claims. The features described in the claims and in the description can be combined with each other in any technologically reasonable manner.

According to the invention an electrolysis cell is presented that comprises:
- an anode,
- a cathode,
- a membrane arranged between the anode and the cathode,
- an isolator that is attached to the anode, the membrane and the cathode such that an anode chamber is formed between the anode, the membrane and the isolator and a cathode chamber is formed between the cathode, the membrane and the isolator,
wherein the isolator comprises multiple isolation elements, and wherein each of the isolation elements is joined permanently to at least one of the other isolation elements.

The electrolysis cell is preferably configured to perform water electrolysis. Thereby, hydrogen and oxygen can be produced from a medium that comprises water. However, the electrolysis cell can also be used for various other types of electrolysis. Preferably, the electrolysis cell is used in an electrolysis stack for performing electrolysis on an industrial scale. Preferably, the electrolysis stack has a power of at least 600 kW.

The electrolysis cell comprises an anode and a cathode. If the electrolysis cell is part of an electrolysis stack the anode and the cathode can be part of a bipolar plate shared with a neighboring electrolysis cell. The electrolysis can be performed by applying a voltage between the anode and the cathode.

The membrane is arranged between the anode and the cathode. The anode is arranged spaced apart from the membrane such that the anode chamber can be formed between the anode and the membrane. The cathode is arranged spaced apart from the membrane such that the cathode chamber can be formed between the cathode and the membrane. The membrane separates the anode space and the cathode space from each other. The membrane is preferably configured as an anion exchange membrane. Alternatively, the membrane can be configured for PEM (polymer electrolyte membrane) electrolysis.

The anode chamber and the cathode chamber can be filled with an electrolyte such that the electrolyte in the anode chamber is in contact with the anode and the membrane and that the electrolyte in the cathode chamber is in contact with the cathode and the membrane. Both the anode chamber and the cathode chamber can be filled with the same electrolyte. Alternatively, the anode chamber can be filled with an anode electrolyte and the cathode chamber can be filled with a cathode electrolyte.

With the membrane being arranged between the anode and the cathode, the anode, the membrane and the cathode can also be described to be arranged in the stated order along a stacking direction. The anode, the membrane and the cathode are preferably configured as respective layers. In that case the anode, the membrane and the cathode are preferably arranged parallel to each other, in particular perpendicular to the stacking direction. In an electrolysis stack having multiple of the described electrolysis cells, the electrolysis cells are preferably arranged along the stacking direction.

Laterally, the anode chamber and the cathode chamber are confined by the isolator. That is, the isolator preferably surrounds the anode chamber and the cathode chamber in a plane perpendicular to the stacking direction. The isolator is preferably configured in a circumferential manner,, in particular having an axis arranged along the stacking direction. The isolator can have, for example, a rectangular, square or circular cross-section. In particular, the isolator can be configured as a ring.

The anode chamber is formed between the anode, the membrane and the isolator. For example, the anode chamber can be confined between the anode and the membrane when viewed along the stacking direction and enclosed by the isolator when viewed perpendicular to the stacking direction. The cathode chamber is formed between the cathode, the membrane and the isolator. For example, the cathode chamber can be confined between the cathode and the membrane when viewed along the stacking direction and enclosed by the isolator when viewed perpendicular to the stacking direction.

The isolator comprises multiple isolation elements. The isolation elements together constitute the isolator. Preferably, the isolator is made of three isolation elements. Preferably, the isolation elements are configured in a circumferential manner, in particular having an axis arranged along the stacking direction. The isolation elements can have, for example, a rectangular, square or circular cross-section. In particular, the isolation elements can be configured in a ring-like manner. That is, the isolation elements surround the anode chamber and/or the cathode chamber. Consequently, the isolator surrounds the anode chamber and the cathode chamber.

The isolator preferably comprises a conduit that connects the anode chamber with the environment of the electrolysis cell and/or a conduit that connects the cathode chamber with the environment of the electrolysis cell. Via these conduits the electrolyte can be introduced into or extracted from the respective chamber. Preferably, the isolator comprises an inlet conduit and an outlet conduit that connect the anode chamber with the environment of the electrolysis cell and/or an inlet conduit and an outlet conduit that connect the cathode chamber with the environment of the electrolysis cell. In that case the electrolyte can be guided into and out of the respective chamber via the respective conduit. In any of the described cases can the respective conduit be formed so as to be surrounded circumferentially by the isolator. For example, the conduit can be a bore through the isolator. However, it is also possible that the conduit is only enclosed partly by the isolator, and also by other elements such as the anode or cathode, respectively. In that case the conduit can be formed by a recess in the isolator at that side of the isolator that is in contact with the element such as the anode or cathode, respectively.

Each of the isolation elements is joined permanently to at least one of the other isolation elements. Preferably, each of the isolation elements is connected to all other isolation elements, in particular joined permanently to all other isolation elements.

With the isolator comprising multiple isolation elements, the number of gaskets can be particularly low. In particular, there is no need for gaskets between electrically isolating material and the membrane. Instead, the membrane can be attached to the isolator without any gaskets being arranged between parts of the isolator and the membrane. This would, in principle, also be possible if the isolator was made of a single piece. However, the membrane is subject to wear and needs frequent replacement. It would be inconvenient if each time the membrane needs replacement the entire isolator had to be replaced or the membrane had to be detached from the isolator. With the described electrolysis cell it is sufficient to replace part of the isolator together with the membrane. In particular, it is sufficient to replace only the one isolation element to which the membrane is attached. To this end, maintenance is facilitated.

Since the described electrolysis cell requires particularly few gaskets, the risk of leakages due to gasket failure is correspondingly low. Also, the described electrolysis cell can be assembled particularly easily. This is true because particularly few parts have to be assembled, which results in a comparatively low risk of errors. Further, with the comparatively low number of gaskets it is possible to arrange the anode and the membrane particularly close to each other and/or to arrange the cathode and the membrane particularly close to each other. This is advantageous in view of efficiency and overall size of an electrolysis stack.

"Joined permanently" is supposed to be understood according to the common meaning of this term in engineering. That is, each of the isolation elements is connected to at least one of the other isolation elements in such a way that the respective isolation elements cannot be separated from each other without destroying the connection. The isolation elements that are joined permanently to each other are connected to each other in a fluid-tight manner. Hence, no gasket is required in between these isolation elements.

Techniques of joining permanently can be homogeneous and inhomogeneous. The latter means that an additional substance such as a glue is used. For the described electrolysis cell, a homogeneous permanent joining is preferred. That is, each of the isolation elements is preferably joined by means of a homogeneous joining technique to at least one of the other isolation elements. Therein, it is not necessary to include the term "permanently". Also in all other cases where herein two elements are described to be joined permanently to each other it is preferred that these elements are joined by means of a homogeneous joining technique.

In a preferred embodiment of the electrolysis cell each of the isolation elements is joined permanently to at least one of the other isolation elements by one of the following:
- welding,
- transparency welding,
- colamination,
- thermocompression
- ultrasound welding.

The stated techniques are examples of permanent joining techniques. It was found that the stated techniques are particularly suitable to be applied in the context of the described electrolysis cell.

In the present embodiment the fact that each of the isolation elements is joined permanently to at least one of the other isolation elements can also be expressed in that each of the isolation elements is connected to at least one of the other isolation elements by one of the following:
- welding,
- transparency welding,
- colamination,
- thermocompression,
- ultrasound welding.

Transparency welding is particularly preferred. Two isolation elements can be joined permanently by transparency welding in that a continuous laser beam is focused onto the interface of the isolation elements at the location where the isolation elements are supposed to be joined permanently to each other. Since the laser is focused at the interface, only a small region surrounding the interface is thermally affected. Where the laser beam is out of focus, the material of the isolation elements does not melt. To this end the isolation elements can be joined permanently to each other in a particular precise and gentle manner.

In a further preferred embodiment of the electrolysis cell a first of the isolation elements is attached to the membrane.

In case the membrane needs replacement, it is sufficient to replace the membrane and the first isolation element. Therein, the membrane and the first isolation element are preferably connected permanently to each other. This facilitates maintenance. This is particularly true in the preferred case that the first isolation element is not in contact with the anode and/or that the first isolation element is not in contact with the cathode. In that case the part(s) of the isolator in contact with the anode and/or cathode can remain attached to the anode and cathode, respectively, if the membrane needs replacement. The first isolation element may constitute this part.

Preferably, the first isolation element is joined permanently to the membrane. This is particularly advantageous if the first isolation element is joined permanently to the membrane at the same time as each of the isolation elements is joined permanently to at least one of the other isolation elements.

In a further preferred embodiment of the electrolysis cell the first isolation element is configured as a sub-gasket.

Herein, the term "sub-gasket" is supposed to be understood according to the conventional meaning of this term in the technical field of electrolysis cells. That is, a sub-gasket is formed by material layers arranged at the top and bottom of the membrane in a circumferential manner. The sub-gasket encloses an active region of the membrane. The main purpose of the sub-gasket is to prevent the formation of holes and cracks in the membrane. Preferably, the sub-gasket has a thickness in the range from 25 µm to 5 mm, in particular from 0.5 to 2 mm. In particular in the case of transparency welding it is preferred that the sub-gasket has a thickness in the range from 0.5 to 5 mm.

The membrane and the sub-gasket can be premanufactured in that the sub-gasket is attached, in particular joined permanently, to the membrane, for example by means of colamination, welding, ultrasound welding or transparency welding. This facilitates the assembly of the electrolysis cell and of an electrolysis stack comprising multiple such electrolysis cells.

In a further preferred embodiment of the electrolysis cell a second of the isolation elements is in contact with the anode and joined permanently to the first isolation element, wherein a third of the isolation elements is in contact with the cathode and joined permanently to the first isolation element.

It is particularly preferred that the isolator is made of three isolation elements. In that case there are preferably only the described first isolation element, the described second isolation element and the described third isolation element.

The second isolation element is preferably arranged at least partly between the membrane and the anode. The anode chamber is preferably enclosed by the anode, the membrane and at least the second isolation element. The third isolation element is preferrable arranged at least partly between the membrane and the cathode. The cathode chamber is preferably enclosed by the cathode, the membrane and at least the third isolation element.

In case the isolator comprises a conduit that connects the anode chamber with the environment of the electrolysis cell and/or a conduit that connects the cathode chamber with the environment of the electrolysis cell, it is preferred that the conduit that connects the anode chamber with the environment of the electrolysis cell is formed in the second isolation element and/or that the conduit that connects the cathode chamber with the environment of the electrolysis cell is formed in the third isolation element. For example, the second isolation element can comprise an inlet conduit and an outlet conduit that connect the anode chamber with the environment of the electrolysis cell and/or the third isolation element can comprise an inlet conduit and an outlet conduit that connect the cathode chamber with the environment of the electrolysis cell.

In a further preferred embodiment the electrolysis cell further comprises a first gasket arranged between the anode and the second isolation element and/or a second gasket arranged between the cathode and the third isolation element. The "and" case is preferred.

It is sufficient for the electrolysis cell to have the described first gasket and the described second gasket. To this end, the number of gaskets is particularly low. The first gasket and/or the second gasket preferably have a ring-shape. The first gasket and/or the second gasket are preferably configured in a circumferential manner.

In a further preferred embodiment of the electrolysis cell the second isolation element and the third isolation element are further joined permanently to each other.

Preferably, the second isolation element and the third isolation element are configured and arranged such that the second isolation element and the third isolation element are at least partly arranged outside of the membrane when viewed perpendicularly to the stacking direction. Thereby, the first isolation element is sealed from the outside of the electrolysis cell by means of the second isolation element and the third isolation element. This reduces the risk of leakage.

In a further preferred embodiment of the electrolysis cell the isolation elements that are joined permanently to each other are joined permanently to each other only along part of an interface between the respective isolation elements.

In this embodiment the respective isolation elements can be joined permanently to each other particularly quickly. Also, it is comparatively easy to destroy the permanent joint for maintenance purposes.

In a further preferred embodiment of the electrolysis cell each of the isolation elements is joined permanently to each of the other isolation elements.

In this embodiment the isolator is particularly stable and fluid-tight.

In a further preferred embodiment of the electrolysis cell all isolation elements are made of the same material.

In this embodiment, heterogeneous interfaces are avoided. In case each of the isolation elements is joined permanently to at least one of the other isolation elements by transparency welding, the material of which all isolation elements are made is preferably selected in view of the wavelength used for transparency welding. This can be done by selecting a proper formulation or by adding an additive that absorbs the respective wavelength.

In a further preferred embodiment of the electrolysis cell the isolation elements are made of a polymer.

Polymers are particularly suitable for transparency welding. This is particularly true for polymers having a high melting point and a low viscosity in the melted state. Particularly preferably the isolation elements are made of a semi-crystalline polymer. Examples are POM, PTFE, PEEK and PEKK. These polymers can also resist alkaline media particularly well.

As a further aspect of the invention an electrolysis arrangement is presented that comprises multiple electrolysis cells that are configured as described.

The advantages and features of the electrolysis cell are transferrable to the electrolysis arrangement, and vice versa.

As a further aspect of the invention a method for maintaining an electrolysis cell that is configured as described is presented, wherein a first of the isolation elements is attached to the membrane. The method comprises:
a) removing the membrane and the first isolation element,
b) providing a new membrane attached to a new first isolation element,
c) permanently joining the new first isolation element to the other isolation element(s).

The advantages and features of the electrolysis cell and of the electrolysis arrangement are transferrable to the method for maintaining the electrolysis cell, and vice versa.

With this method the described advantage can be exploited that the membrane and the first isolation element can be removed easily in case the membrane needs replacement. It is sufficient to replace the membrane together with the first isolation element. The remaining parts of the isolator, in particular the second isolation element and the third isolation element, can stay in place.

In the following the invention will be described with respect to the figures. The figures show a preferred embodiment, to which the invention is not limited. The figures and the dimensions shown therein are only schematic. The figures show:
- Fig. 1:: an electrolysis cell according to the invention,
- Fig. 2:: a visualization of a manufacturing step of the electrolysis cell of Fig. 1,
- Fig. 3:: an electrolysis arrangement according to the invention comprising multiple of the electrolysis cells of Fig. 1.

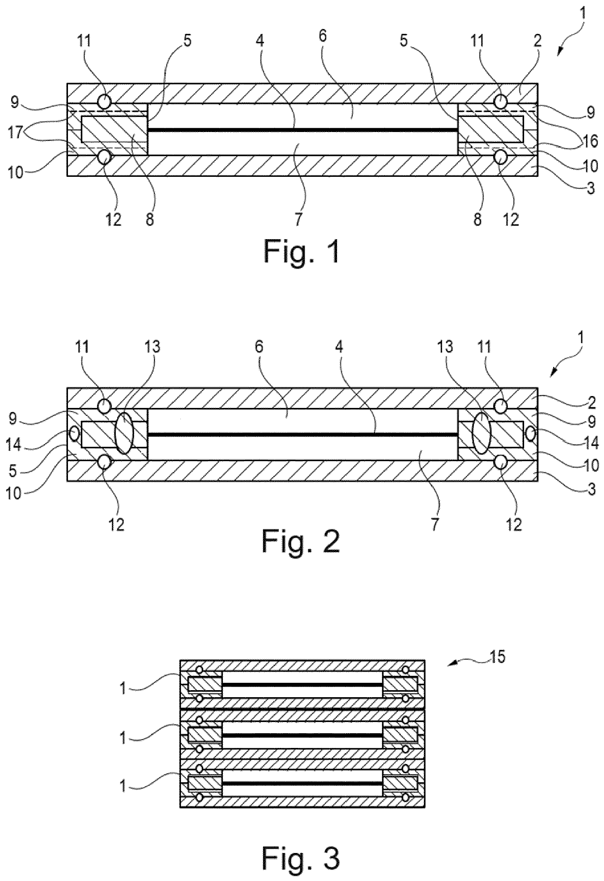

Fig. 1 shows an electrolysis cell 1 that comprises an anode 2, a cathode 3 and a membrane 4 arranged between the anode 2 and the cathode 3. Further, the electrolysis cell 1 comprises an isolator 5 that is attached to the anode 2, the membrane 4 and the cathode 3 such that an anode chamber 6 is formed between the anode 2, the membrane 4 and the isolator 5 and a cathode chamber 7 is formed between the cathode 3, the membrane 4 and the isolator 5. The isolator 3 comprises three isolation elements 8,9,10 that are joined permanently to each other, for example by means of transparency welding. All isolation elements 8,9,10 are made of the same polymer.

A first isolation element 8 is configured as a sub-gasket and attached to the membrane 4. A second isolation element 9 is in contact with the anode 2 and joined permanently to the first isolation element 8. A third isolation element 10 is in contact with the cathode 3 and joined permanently to the first isolation element 8.

The electrolysis cell 1 further comprises a first gasket 11 arranged between the anode 2 and the second isolation element 9 and a second gasket 12 arranged between the cathode 3 and the third isolation element 10. The second isolation element 9 and the third isolation element 10 are further joined permanently to each other.

The isolator 5 comprises a respective inlet conduit 16 and a respective outlet conduit 17 that connect the anode chamber 6 and the cathode chamber 7 with the environment of the electrolysis cell 1. The conduits 16,17 are indicated schematically by dashed lines. In Fig. 2 the conduits 16,17 are not shown for clarity.

Fig. 2 illustrates the step of permanently joining the isolation elements 8,9,10 to each other by means of transparency welding. Therefore, a first joining region 13 and a second joining region 14 are indicated. Where the first joining region 13 overlaps with the interface of the first isolation element 8 and the second isolation element 9, the first isolation element 8 and the second isolation element 9 are joined permanently to each other. Where the first joining region 13 overlaps with the interface of the first isolation element 8 and the third isolation element 10, the first isolation element 8 and the third isolation element 10 are joined permanently to each other. Where the second joining region 14 overlaps with the interface of the second isolation element 9 and the third isolation element 10, the second isolation element 9 and the third isolation element 10 are joined permanently to each other. As a result, the isolation elements 8,9,10 are joined permanently to each other only along part of an interface between them.

Fig. 3 shows an electrolysis arrangement 15 comprising multiple of the electrolysis cells 1 of Fig. 1.

### List of reference numerals

- 1: electrolysis cell
- 2: anode
- 3: cathode
- 4: membrane
- 5: isolator
- 6: anode chamber
- 7: cathode chamber
- 8: first isolation element
- 9: second isolation element
- 10: third isolation element
- 11: first gasket
- 12: second gasket
- 13: first joining region
- 14: second joining region
- 15: electrolysis arrangement
- 16: inlet conduit
- 17: outlet conduit

## Claims

1. Electrolysis cell (1), comprising
- an anode (2),
- a cathode (3),
- a membrane (4) arranged between the anode (2) and the cathode (3),
- an isolator (5) that is attached to the anode (2), the membrane (4) and the cathode (3) such that an anode chamber (6) is formed between the anode (2), the membrane (4) and the isolator (5) and a cathode chamber (7) is formed between the cathode (3), the membrane (4) and the isolator (5),
wherein the isolator (5) comprises multiple isolation elements (8,9,10), and
wherein each of the isolation elements (8,9,10) is joined permanently to at least one of the other isolation elements (8,9,10).

2. Electrolysis cell (1) according to claim 1, wherein each of the isolation elements (8,9,10) is joined permanently to at least one of the other isolation elements (8,9,10) by one of the following:
- welding,
- transparency welding,
- colamination,
- thermocompression,
- ultrasound welding.

3. Electrolysis cell (1) according to any of the preceding claims, wherein a first of the isolation elements (8) is attached to the membrane (4).

4. Electrolysis cell (1) according to claim 3, wherein the first isolation element (8) is configured as a sub-gasket.

5. Electrolysis cell (1) according to claim 3 or 4, wherein a second of the isolation elements (9) is in contact with the anode (2) and joined permanently to the first isolation element (8), and wherein a third of the isolation elements (10) is in contact with the cathode (3) and joined permanently to the first isolation element (8).

6. Electrolysis cell (1) according to claim 5, further comprising a first gasket (11) arranged between the anode (2) and the second isolation element (9) and/or a second gasket (12) arranged between the cathode (3) and the third isolation element (10).

7. Electrolysis cell (1) according to claim 5 or 6, wherein the second isolation element (9) and the third isolation element (10) are further joined permanently to each other.

8. Electrolysis cell (1) according to any of the preceding claims, wherein the isolation elements (8,9,10) that are joined permanently to each other are joined permanently to each other only along part of an interface between the respective isolation elements (8,9,10).

9. Electrolysis cell (1) according to any of the preceding claims, wherein each of the isolation elements (8,9,10) is joined permanently to each of the other isolation elements (8,9,10).

10. Electrolysis cell (1) according to any of the preceding claims, wherein all isolation elements (8,9,10) are made of the same material.

11. Electrolysis cell (1) according to any of the preceding claims, wherein the isolation elements (8,9,10) are made of a polymer.

12. Electrolysis arrangement (13) comprising multiple electrolysis cells (1) according to any of the preceding claims.

13. Method for maintaining an electrolysis cell (1) according to one of claims 1 to 11, wherein a first of the isolation elements (8) is attached to the membrane (4), and wherein the method comprises:
a) removing the membrane (4) and the first isolation element (8),
b) providing a new membrane (4) attached to a new first isolation element (8),
c) permanently joining the new first isolation element (8) to the other isolation element(s) (9,10).
